# EUROPEAN PATENT APPLICATION

(11) **EP 4 484 047 A1**
(43) Date of publication of application: **01.01.2025**
(21) Application number: 22933652.4
(22) Date of filing: 09.12.2022
(51) Int. Cl.: B23K 13/00, B21C 37/08, C22C 38/00, C22C 38/14, C22C 38/58

(54) **ELECTRIC RESISTANCE WELDED PIPE AND METHOD FOR MANUFACTURING SAME**

(30) Priority: 25.03.2022 JP 2022050790
(71) Applicant: JFE Steel Corporation, Tokyo 100-0011 (JP)
(72) Inventor: MATSUMOTO, Atsushi, Tokyo 100-0011 (JP); NAKAZAWA, Ryo, Tokyo 100-0011 (JP); OKABE, Takatoshi, Tokyo 100-0011 (JP); KATSUMURA, Tatsuro, Tokyo 100-0011 (JP)
(74) Representative: Haseltine Lake Kempner LLP
(86) International application number: PCT/JP2022/045571
(87) International publication number: WO 2023/181523

(57) **Abstract**

Provided is an electric resistance welded pipe or tube that has excellent weld portion toughness and in which, in order to enhance the fit between the inner and outer pipes or tubes when the electric resistance welded pipe or tube is used as the outer pipe or tube, the convexity height of the cutting mark on the inner side of the outer pipe or tube has been reduced by cutting the weld bead on the inner side only once. An electric resistance welded pipe or tube comprises a weld portion in a pipe or tube longitudinal direction, wherein a maximum value of a wall thickness distribution of the weld portion is less than or equal to 1.05 times an average wall thickness of the electric resistance welded pipe or tube, a width of a weld metal in the weld portion in a circumferential direction is 1 µm or more and 800 µm or less over an entire thickness of the electric resistance welded pipe or tube, and a ratio of a maximum value to a minimum value (= maximum value/minimum value) of the width of the weld metal is 1.0 or more and 2.5 or less.

## Description

### TECHNICAL FIELD

The present disclosure relates to an electric resistance welded pipe or tube and a method of producing the same. The present disclosure especially relates to an electric resistance welded pipe or tube suitable for use as an outer pipe or tube of a double (i.e. double-walled) pipe or tube formed by layering different metal materials on the inside and outside, and a method of producing the same.

### BACKGROUND

Metal pipes or tubes are usually single (i.e. single-walled) pipes or tubes made up of one type of metal material. Depending on the application, however, double pipes or tubes made up of two different types of metal materials may be used to provide functionality to the inner or outer surface of the metal pipe or tube.

In particular, in the case where a highly corrosive production fluid such as petroleum or natural gas is transported inside a steel pipe or tube and also high strength and excellent toughness are required of the metal pipe or tube, a double pipe or tube is often used in which a high corrosion resistant alloy such as a Ni-based alloy is used for the inner pipe or tube and a low-carbon low-alloy steel pipe or tube is used for the open pipe or tube, which is a cylindrical strip before welding, of the outer pipe or tube.

Various production methods are known for such double pipes or tubes. One example is a method that mechanically fits the inner and outer pipes or tubes together through pipe or tube expansion or the like. Mechanically fitted pipes or tubes obtained by this method are currently in wide use because a wide variety of combinations of metal pipe or tube types can be selected and long pipes or tubes can be produced easily.

However, such mechanically fitted pipes or tubes have the problem in that, if the fit between the inner and outer pipes or tubes is insufficient, the inner pipe or tube comes off the outer pipe or tube and the function as a double pipe or tube is lost.

In order to ensure a high fit between the inner and outer pipes or tubes of the mechanically fitted pipe or tube, it is necessary to strictly control, for example, the pipe or tube expansion rate of the inner pipe or tube or the diameter reduction rate of the outer pipe or tube.

In view of this problem, various techniques of producing mechanically fitted pipes or tubes are proposed to enhance the fit between the inner and outer pipes or tubes.

For example, JP S58-41611 A (PTL 1) proposes a method in which cold drawing is performed using a tapered die, an inner pipe or tube is inserted inside an outer pipe or tube, then diameter reduction is performed so that the gap between the outer and inner pipes or tubes will be 0.02 mm or less, and further diameter expansion is performed using an inside expansion plug to expand the inner diameter of the inner pipe or tube and fit the outer and inner pipes or tubes together.

### CITATION LIST

### Patent Literature

PTL 1: JP S58-41611 A

### SUMMARY

### (Technical Problem)

In the case of using an electric resistance welded pipe or tube as the outer pipe or tube of the double pipe or tube, it is necessary to cut off the weld bead that inevitably occurs in the electric resistance weld portion. This cutting leaves a part called a cutting residual part in which both widthwise ends of a cutting mark especially on the inner side are raised convexly (i.e. protrude) in the wall thickness direction.

If the convexity height of the cutting residual part is large, even the use of the method proposed in PTL 1 cannot bring the outer and inner pipes or tubes into tight contact with each other around the convexly raised cutting residual part.

This problem cannot be solved even if the convexity height of the cutting residual part is reduced by changing the shape of the bead cutting blade so as to expand the circumferential region where the weld bead is cut off on the inner side of the electric resistance welded pipe or tube, because such a shape of the bead cutting blade increases resistance when cutting the weld bead and consequently increases chattering vibration during cutting, causing an unstable shape of the cutting mark of the bead cutting part.

Moreover, an attempt to cut off the convexly raised cutting residual part with the cutting blade again leads to lower productivity due to an excessive work load of, for example, adjusting the position of the cutting blade to the residual part.

It could therefore be helpful to provide an electric resistance welded pipe or tube that has excellent weld portion toughness and in which, in order to enhance the fit between the inner and outer pipes or tubes when the electric resistance welded pipe or tube is used as the outer pipe or tube, the convexity height of the cutting mark on the inner side of the outer pipe or tube has been reduced by cutting the weld bead on the inner side only once, and an advantageous method of producing the same.

### (Solution to Problem)

Upon careful examination on an electric resistance welding method that can reduce the convexity height of the cutting mark on the inner side of the outer pipe or tube by cutting the bead on the inner side of the outer pipe or tube only once, we found the following.

The cutting residual part convexly raised in the wall thickness direction after cutting the weld bead on the inner side is the weld metal part and the heat-affected zone (which are also collectively referred to as "weld portion" in the present disclosure) around the joint deformed by high temperature in the wall thickness direction by pressing (upset) by the squeeze rolls of the welding stand.

Reducing the upset of the squeeze rolls lessens high temperature deformation and consequently reduces the weld bead after electric resistance welding. As a result, even with one bead cutting on the pipe or tube inner side, the weld bead and the heat-affected zone around the joint deformed by high temperature can be sufficiently removed so as not to adversely affect the production of the double pipe or tube.

If the upset is reduced, however, molten steel containing oxides present at the joint surfaces immediately before welding cannot be completely discharged to the outside, and ends up existing as defects in the weld portion. This significantly degrades the quality of the weld portion, particularly toughness.

Upon further examination, we discovered that, by more locally heating the joint end surfaces before welding, it is possible to narrow the heat-affected zone around the joint in the circumferential direction and reduce the region where high-temperature deformation occurs to thus reduce the weld bead, without reducing the upset as mentioned above.

The present disclosure is based on these discoveries and further studies. We thus provide the following.
1. An electric resistance welded pipe or tube comprising a weld portion in a pipe or tube longitudinal direction, wherein a maximum value of a wall thickness distribution of the weld portion is less than or equal to 1.05 times an average wall thickness of the electric resistance welded pipe or tube, a width of a weld metal in the weld portion in a circumferential direction is 1 µm or more and 800 µm or less over an entire thickness of the electric resistance welded pipe or tube, and a ratio of a maximum value to a minimum value of the width of the weld metal is 1.0 or more and 2.5 or less, the ratio being calculated by dividing the maximum value by the minimum value.
2. The electric resistance welded pipe or tube according to 1., wherein a toughness value of the weld portion is 90 J or more at 0 °C.
3. A method of producing the electric resistance welded pipe or tube according to 1. or 2., the method comprising: performing electric resistance welding on circumferential end surfaces of an open pipe or tube as joint surfaces; and thereafter performing cutting work, wherein the joint surfaces form a double V groove in which faces on both pipe or tube inner and outer sides have a bevel angle of 10° or more and 30° or less and a root face in a wall thickness direction is 50 % or more and 80 % or less of an average wall thickness, and a frequency of a welding current used in the electric resistance welding is 500 kHz or more and 5000 kHz or less.
4. The method according to 3., wherein after the electric resistance welding, the cutting work is performed once to cause a maximum value of a wall thickness distribution on a pipe or tube inner surface of a weld portion formed by the electric resistance welding to be less than or equal to 1.05 times an average wall thickness of the electric resistance welded pipe or tube.

### (Advantageous Effect)

It is thus possible to provide an electric resistance welded pipe or tube in which the weld bead on the inner side is small and the convexity height of the cutting residual part after cutting the weld bead is low and that is particularly suitable for use as an outer pipe or tube of a double pipe or tube, and a method of producing the same.

### BRIEF DESCRIPTION OF THE DRAWINGS

In the accompanying drawings:
FIG. 1 is a schematic diagram illustrating an example of an electric resistance welded pipe or tube production line.
FIG. 2A is a schematic diagram illustrating the heating state of the end surfaces of a steel strip before electric resistance welding in conventional technology;
FIG. 2B is a schematic diagram illustrating the heating state of the end surfaces of the steel strip before electric resistance welding in conventional technology;
FIG. 2C is a schematic diagram illustrating the heating state of the end surfaces of the steel strip before electric resistance welding in conventional technology;
FIG. 3A is a schematic diagram illustrating the heating state of the end surfaces of a steel strip before electric resistance welding in the present disclosure;
FIG. 3B is a schematic diagram illustrating the heating state of the end surfaces of the steel strip before electric resistance welding in the present disclosure;
FIG. 3C is a schematic diagram illustrating the heating state of the end surfaces of the steel strip before electric resistance welding in the present disclosure;
FIG. 4 is a schematic diagram of a cut section around a weld portion immediately after welding of an electric resistance welded pipe or tube; and
FIG. 5 is a schematic diagram of a cut section after weld bead cutting of the electric resistance welded pipe or tube.

### DETAILED DESCRIPTION

An embodiment of the present disclosure will be described below, with reference to the drawings.

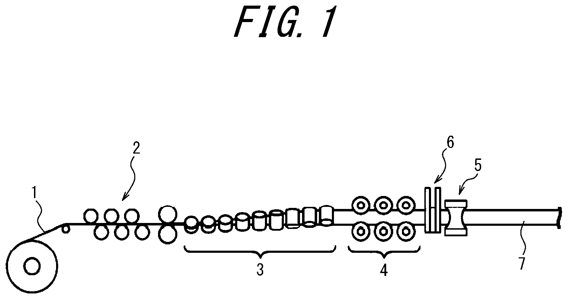

FIG. 1 is a schematic diagram illustrating an example of a welding process in production of electric resistance welded pipes or tubes. Specifically, a steel strip 1 as material is straightened on the entry side by a leveler 2 for example, then subjected to intermediate forming into an open pipe or tube by a cage roll group 3 composed of a plurality of rolls, and then subjected to finish forming into a pipe or tube shape by a fin pass roll group 4 composed of a plurality of rolls. After this, electric resistance welding is performed on the widthwise end surfaces of the steel strip 1 (i.e. the circumferential end surfaces of the open pipe or tube) using a welder 6 while pressing with squeeze rolls 5, to yield an electric resistance welded pipe or tube 7. An example of the steel strip 1 is a hot-rolled steel sheet of carbon steel.

For electric resistance welding by the welder 6, the following two methods are widely used: induction heating whereby, while passing the steel strip 1 which has been finished into a pipe or tube shape through a work coil provided with an impeder, the widthwise ends of the steel strip 1 are heated; and direct current heating whereby a contact tip is brought into direct contact with the widthwise ends of the steel strip 1 to heat the widthwise ends of the steel strip 1.

In both methods, the high-frequency current used during electric resistance welding is mainly 400 kHz or less. The frequency is selected for each welder depending on the application of the product pipe or tube.

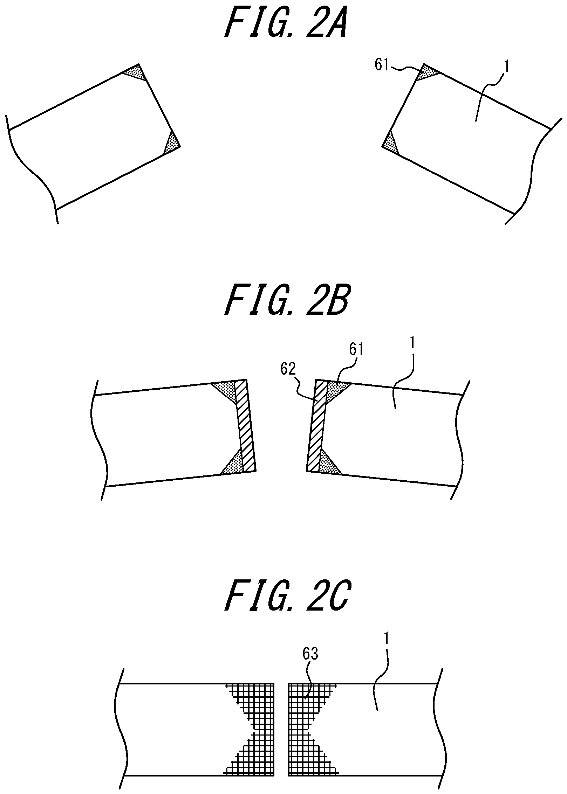

FIGS. 2A to 2C illustrate a process of heating the widthwise end surfaces of the steel strip 1 (the circumferential end surfaces of the open pipe or tube, hereafter also simply referred to as "end surfaces") in electric resistance welding in conventional technology. First, skin effect (heated part 61 due to skin effect) occurs in which heat is concentrated at the corners of each end surface (see FIG. 2A). After this, when forming progresses and both widthwise end surfaces approach each other, proximity effect (heated part 62 due to proximity effect) occurs (see FIG. 2B). Further, a heating phenomenon specific to high-frequency heating occurs in which proximity effect is exerted on the entire end surface (heat-affected zone 63 immediately before electric resistance welding) (see FIG. 2C).

Typically, heat generation through high-frequency heating is caused by hysteresis loss and eddy current loss in the heated object. In particular, eddy current which causes eddy current loss flows concentratedly on the surface of the heated object when the frequency of the current increases. The depth from the surface of the heated object to which heating due to eddy current loss reaches is called the penetration depth. The penetration depth is inversely proportional to the square root of the frequency of the current. Thus, it is known that, in electric resistance welding, when the frequency of high-frequency current increases, heat is concentrated more at the end surfaces of the joint and the heat-affected zones become narrower.

Hence, when the frequency increases in electric resistance welding, the high-temperature deformation of the heat-affected zones of the ends can be localized in the upset of the squeeze rolls 5 (see FIG. 1) downstream of the heating process, with it being possible to make the weld bead smaller. Moreover, locally concentrating the high-temperature deformation of the heat-affected zones of the ends increases the pressure of the upset and promotes the discharge of molten metal containing oxides, so that the quality of the weld portion is improved.

Meanwhile, when the frequency of the current increases, the heat generated at the corners due to skin effect in the initial stage of the heating process is more localized, so that the distance of heat transfer from the heated corners to the wall thickness center part of each end increases. Accordingly, the wall thickness center part is not heated sufficiently until proximity effect occurs, causing a significant temperature difference between the inner and outer sides and the wall thickness center part of the end surface. This significant temperature difference is not eliminated even when proximity effect occurs. As a result, the melt distribution of the end surface on the entry side of the squeeze rolls 5 (see FIG. 1) becomes non-uniform, hindering the discharge of oxides by the upset and degrading the quality of the weld portion of the product.

In order to suppress the concentration of heat at the corners due to skin effect in the initial stage of the heating process, we conceived to work the steel strip as material by changing the corners of the end surfaces from the conventional rectangular shape to a groove shape to thus avoid the concentration of heat at the corners due to skin effect and generate heat over a wide area of each end surface.

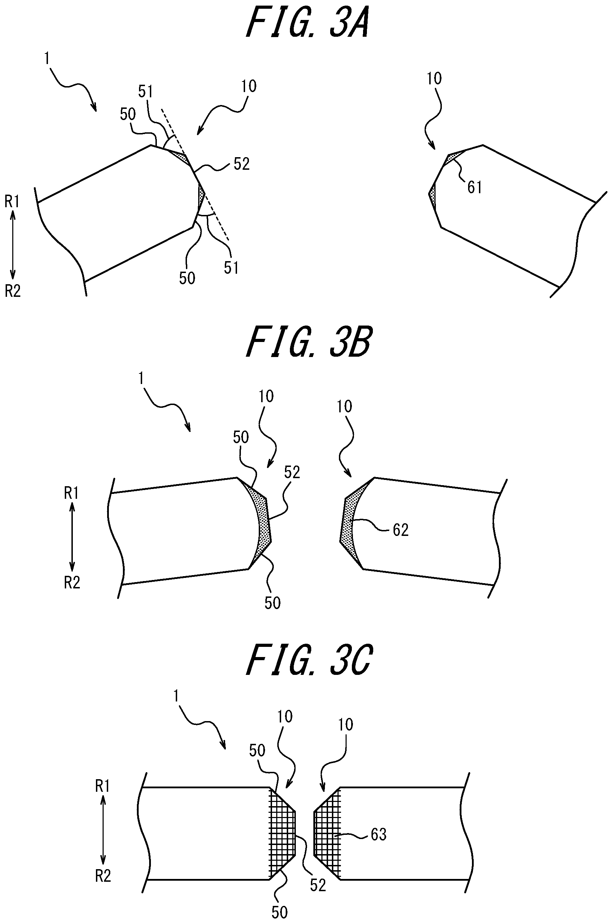

FIGS. 3A to 3C schematically illustrate an example of the heating state of the end surfaces 10 (ends) of the steel strip 1 before electric resistance welding in the present disclosure. In FIGS. 3A to 3C, direction R1 is the radially outward direction of the open pipe or tube to be worked into an electric resistance welded pipe or tube, and direction R2 is the radially inward direction of the open pipe or tube.

It was found that, with this groove shape, eddy current does not concentrate at the corners and the heat generated due to skin effect spreads to the vicinity of the wall thickness center part of each end surface 10.

Even in the case where the corners of the end surfaces 10 are changed from the conventional rectangular shape to the groove shape, the process of heating the end surfaces 10 in electric resistance welding is the same as in the case of the conventional rectangular shape. In detail, as illustrated in FIGS. 3A to 3C, in the process of heating the end surfaces 10 in electric resistance welding, first, skin effect (heated part 61 due to skin effect) occurs in which heat is concentrated at the corners of each end surface 10 (see FIG. 3A). After this, when forming progresses and both widthwise end surfaces 10 approach each other, proximity effect (heated part 62 due to proximity effect) occurs (see FIG. 3B). Further, a heating phenomenon specific to high-frequency heating occurs in which proximity effect is exerted on the entire end surface 10 (heat-affected zone 63 immediately before electric resistance welding) (see FIG. 3C).

Here, in the case where the end surfaces 10 have the groove shape, the heat generated at the corners (see FIG. 3A) due to skin effect in the initial stage of the heating process (see FIGS. 3A to 3C) is dispersed to the surroundings of the corners of each end surface 10. In other words, when the corners of the end surface 10 are removed as in the steel strip 1 illustrated in FIG. 3A and the end surface 10 is shaped into a groove with obtuse corners, the heat generated at the corners is dispersed over a wider range.

This action expands the heat generation range (heated part 61 due to skin effect) to the wall thickness center part (i.e. the center of the root face 52) of the end surface 10 of the steel strip 1, and reduces the temperature difference between the faces 50 which are the inner and outer surfaces (the inward facing surface and the outward facing surface) of the end surface 10 and the wall thickness center part (the center of the root face 52). Subsequently, when proximity effect occurs (see FIG. 3B), the end surface 10 has an approximately uniform temperature distribution.

Specifically, the groove shape is a double V groove in which the width of the root face 52 in the wall thickness direction of the steel strip 1 is 50 % or more and 80 % or less of the average wall thickness of the steel strip 1. The width of the root face 52 in the wall thickness direction of the steel strip 1 is hereafter simply referred to as the "width of the root face 52". The wall thickness direction of the steel strip 1 and the thickness direction of the pipe or tube wall of the electric resistance welded pipe or tube formed from the steel strip 1 are hereafter collectively referred to as "wall thickness direction".

If the width of the root face 52 is less than 50 % of the average wall thickness, the volume of the end of the steel strip 1 that melts during electric resistance welding is excessively small, so that molten metal sufficient to discharge oxides to the outside by upset cannot be obtained. If the width of the root face 52 is more than 80 % of the average wall thickness, the distance of heat transfer from the heated part 61 due to skin effect at the corners on the faces 50, which are the inner and outer surfaces of the end surface 10 with the groove shape, to the wall thickness center part is long, making it impossible to sufficiently heat the wall thickness center part through heat transfer from the heated part 61 due to skin effect. The width of the root face 52 of the groove shape is preferably 60 % or more. The width of the root face 52 of the groove shape is preferably 70 % or less.

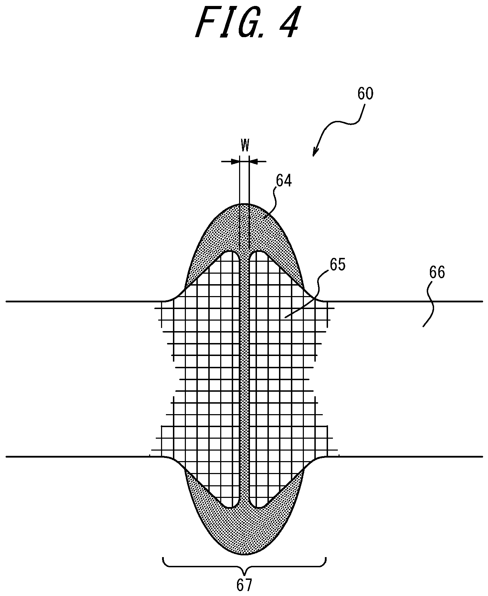

In the present disclosure, the average wall thickness of the electric resistance welded pipe or tube refers to the average value of the pipe or tube wall thickness at three points of ±90° and 180° in the circumferential direction of the electric resistance welded pipe or tube (hereafter simply referred to as "circumferential direction") from the circumferential center of the weld portion 60 (see FIG. 4) of the electric resistance welded pipe or tube after welding.

The bevel angle of each of the faces 50, which are the inner and outer surfaces of the groove machined onto the end surface 10 and the pipe or tube inner and outer surfaces connected to the end surface 10, is 10° or more and 30° or less.

If the bevel angle of each of the faces 50 which are the inner and outer surfaces of the groove is less than 10°, the edges of the joint surface (end surface 10) on the pipe or tube inner and outer surfaces (inner and outer sides) are almost at right angles, i.e. almost rectangular, so that the heat generated due to skin effect is concentrated at the edges. This causes a significant temperature difference between the pipe or tube inner and outer sides and the wall thickness center part of the end surface 10, degrading the quality of the weld portion 60 (see FIG. 4). If the bevel angle of the groove is more than 30°, even when the minimum width of the root face 52 is secured, the part reduced in thickness by groove machining remains after welding, and consequently the desired shape of the weld portion 60 cannot be obtained. The bevel angle is preferably 15° or more. The bevel angle is preferably 25° or less.

The shape of the double V groove (end surface 10) does not need to be symmetrical on the inner and outer sides of the pipe or tube, as long as the groove shape satisfies the foregoing width of the root face 52 and bevel angle on both the inner and outer sides.

The groove (end surface 10) may be worked by any method, such as a method of mechanically grinding either the steel strip before being made into an open pipe or tube or the open pipe or tube before welding or a method of forming the groove with a tapered roll.

The amount of upset by the squeeze rolls 5 is preferably 20 % or more and 60 % or less of the sheet thickness (nominal thickness) of the steel strip 1. The amount of upset is controlled based on the outer circumferential length of the pipe or tube.

This process has the effect of discharging molten metal containing oxides generated on both widthwise end surfaces of the open pipe or tube during the heating process to the outside of the pipe or tube. If the amount of upset is less than 20 % of the average wall thickness, the discharge of the weld metal may be insufficient, causing degradation in the quality of the weld portion 60 (see FIG. 4). If the amount of upset is more than 60 % of the average wall thickness, the metal flow including the segregation zone near the weld portion is excessively steep and is exposed to the outside. Such steep segregation zone serves as a crack initiation point, making the weld portion 60 susceptible to cracking.

The amount of upset is more preferably 25 % or more of the sheet thickness. The amount of upset is more preferably 55 % or less of the sheet thickness. The amount of upset is further preferably 35 % or more of the sheet thickness. The amount of upset is further preferably 50 % or less of the sheet thickness.

As illustrated in FIG. 4, the cross section of the weld portion 60 formed in the longitudinal direction of the electric resistance welded pipe or tube by electric resistance welding has a weld metal part 64, a heat-affected zone 65, and a base metal part 66 in this order from the circumferential center of the weld portion 60.

Herein, the term "weld metal" means the metal that has melted during welding and subsequently solidified, in the electric resistance welded pipe or tube. For example, if the steel strip 1 is carbon steel or low-alloy steel, when morphology is made visible by natal etching, the weld metal can be identified as a region observed as white by an optical microscope. The part of the weld portion 60 raised on the inner and outer sides, including the weld metal part 64 and the heat-affected zone 65, is called a weld bead 67.

In the present disclosure, the width of the weld metal part 64 in the circumferential direction (see width W in FIG. 4) is 1 µm or more and 800 µm or less over the entire thickness of the electric resistance welded pipe or tube (i.e. over the entire area in the wall thickness direction). If the width of the weld metal part 64 is less than 1 µm, there is not sufficient weld metal to join both end surfaces of the open pipe or tube, causing the weld portion 60 to crack. If the width of the weld metal part 64 is more than 800 µm, the quality of the weld portion 60 degrades due to insufficient discharge of molten metal by upset. The width of the weld metal part 64 is preferably 1.5 µm or more. The width of the weld metal part 64 is preferably 500 µm or less.

Typically, the width of the weld metal part 64 over the entire thickness of the electric resistance welded pipe or tube tends to be larger on the inner and outer sides and smaller in the vicinity of the wall thickness center. This indicates that the molten state of both circumferential end surfaces of the open pipe or tube immediately before the squeeze rolls (see FIG. 1) is non-uniform in the wall thickness direction. If the distribution is noticeably non-uniform, when discharging the weld metal part 64 to the outside by upset, the flow of the weld metal is hindered by unmelted sites. This degrades the quality of the weld portion 60.

If the ratio of the maximum value to the minimum value (= maximum value/minimum value) of the width of the weld metal part 64 over the entire thickness of the electric resistance welded pipe or tube is 1.0 or more and 2.5 or less, the weld metal is appropriately discharged to the outside during upset. If the ratio is more than 2.5, the quality of the weld portion 60 degrades significantly.

In order to reduce the weld bead 67, the frequency of high-frequency current used in the welder 6 is 500 kHz or more and 5000 kHz or less in the present disclosure.

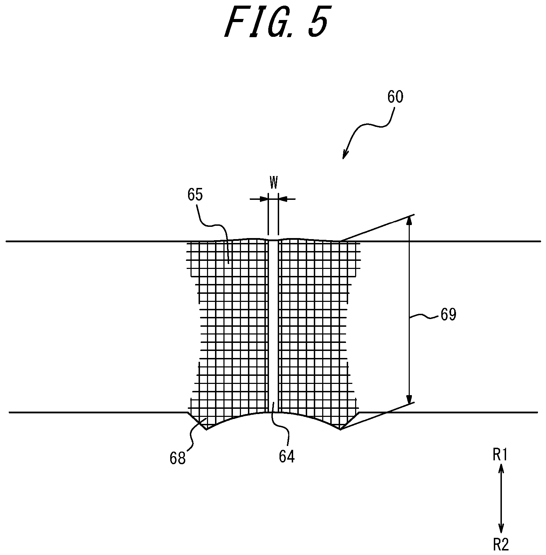

If the frequency increases, the width of the heat-affected zone 65 decreases and high-temperature deformation during welding is localized. If the frequency is less than 500 kHz, the weld bead shape is the same as that of existing electric resistance welded pipes or tubes, and the convexity height of the cutting residual part 68 (see FIG. 5) convexly raised in the wall thickness direction after bead cutting on the inner side remains problematic. If the frequency is more than 5000 kHz, skin effect in the heating process of welding is more localized and accordingly welding efficiency degrades and heating is insufficient, so that the quality of the weld portion 60 remains problematic.

The frequency of high-frequency current is preferably 800 kHz or more and more preferably 1000 kHz or more, in order to obtain a more stable shape of the cutting residual part 68 of the bead (see FIG. 5). The frequency of high-frequency current is preferably 3000 kHz or less and more preferably 2000 kHz or less, in order to maintain a uniform temperature distribution of the heated end to ensure better weld portion quality.

The present disclosure is characterized in that the end surfaces 10 (see FIG. 3A, etc.) of the open pipe or tube before electric resistance welding form a double V groove and the frequency of high-frequency current used in the welder 6 is 500 kHz or more and 5000 kHz or less. Performing welding under such conditions enables the ratio of the maximum value to the minimum value (= maximum value/minimum value) of the width of the weld metal part 64 to be 1.0 or more and 2.5 or less.

A bead cutter for cutting the weld bead 67 is provided downstream of the welder 6 (see FIG. 1). The bead cutter is used to cut the weld bead 67 on the inner and outer surfaces of the electric resistance welded pipe or tube. The radius of curvature of the cutting edge of the bead cutter on the inner side of the electric resistance welded pipe or tube is designed to be less than the inner radius of the pipe or tube. The radius of curvature of the cutting edge of the bead cutter on the inner side is desirably as close to the inner radius of the pipe or tube as possible in order to reduce the below-described convexly raised cutting residual part. Considering chattering vibration during cutting, the radius of curvature of the cutting edge of the bead cutter on the inner side is preferably 5 % or more and 60 % or less of the inner radius of the pipe or tube. The radius of curvature of the cutting edge of the bead cutter on the inner side is more preferably 10 % or more of the inner radius of the pipe or tube. The radius of curvature of the cutting edge of the bead cutter on the inner side is more preferably 30 % or less of the inner radius of the pipe or tube.

In order to control the quenched microstructure of the weld portion 60 in the electric resistance welded pipe or tube that has undergone bead cutting as described above, the weld portion 60 may be subjected to heat treatment of quenching and tempering or heat treatment of normalizing. Here, any known method may be used without limitation.

In the cross section around the weld metal part 64 orthogonal to the longitudinal direction of the electric resistance welded pipe or tube obtained in this way, especially on the pipe or tube inner side, cutting residual parts 68 convexly raised (i.e. protruding) in the wall thickness direction are seen in the parts corresponding to the vicinity of both circumferential ends of the weld metal part 64 (see FIG. 4) before cutting, as illustrated in FIG. 5. The protrusion of the cutting residual part 68 tends to be noticeable over a region from the center of the weld metal part 64 to a position circumferentially away from the center by the average wall thickness of the pipe or tube. In FIG. 5, direction R1 is the radially outward direction of the electric resistance welded pipe or tube and direction R2 is the radially inward direction of the electric resistance welded pipe or tube, as in FIGS. 3A to 3C. The radial direction of the electric resistance welded pipe or tube is the same as the wall thickness direction. The inner side of the electric resistance welded pipe or tube is the direction R2 side.

In the case where the electric resistance welded pipe or tube is used as the outer pipe or tube of a double pipe or tube, if the protrusion of the cutting residual part 68 is large, i.e. if the wall thickness of the corresponding site is large, the fit degrades as the outer pipe or tube cannot be in tight contact with the inner pipe or tube around the cutting residual part 68.

As illustrated in FIG. 5, the thickness of the site where the protrusion of the cutting residual part 68 by one cutting work has the maximum height in the wall thickness direction is the maximum value of the wall thickness distribution of the weld portion 60. The maximum value is less than or equal to 1.05 times the average wall thickness of the pipe or tube. If the maximum value is more than 1.05 times the average wall thickness of the pipe or tube, the fit is poor and the pipe or tube does not function as a double pipe or tube. The maximum value is preferably less than or equal to 1.03 times the average wall thickness of the pipe or tube. The maximum value is preferably the same as the average wall thickness of the pipe or tube. Industrially, the maximum value is preferably more than or equal to 1.02 times the average wall thickness of the pipe or tube.

In the present disclosure, one cutting work refers to one bead cutting on the pipe or tube inner side, and means that the cutting edge of the bead cutter traces the weld bead 67 to be cut (see FIG. 4) in the longitudinal direction of the electric resistance welded pipe or tube only once without repetition.

The chemical composition of the electric resistance welded pipe or tube according to the present disclosure will be described below. The chemical composition is not limited to such, and any chemical composition usable for electric resistance welded pipes or tubes may be used. Herein, "%" representing the content in the chemical composition denotes "mass%".

In the present disclosure, the chemical composition of the steel strip 1 (see FIG. 1) preferably contains, in mass%, C: 0.02 % to 0.10 %, Si: 0.05 % to 0.30 %, Mn: 0.80 % to 2.00 %, P: 0.030 % or less, S: 0.0050 % or less, Nb: 0.010 % to 0.100 %, Ti: 0.001 % to 0.025 %, and Al: 0.01 % to 0.08 %, with the balance consisting of Fe and inevitable impurities.

### (C: 0.02 % to 0.10 %)

C is an element that contributes greatly to increasing the strength of the electric resistance welded pipe or tube. In order to achieve this effect, the C content is preferably 0.02 % or more. If the C content is more than 0.10 %, the formation of hard phase such as pearlite and martensite is promoted, which may cause a decrease in toughness. Moreover, if C is contained in a large amount of more than 0.10 %, the strength (hardness) of bainite phase may increase excessively, causing a decrease in toughness. The C content is therefore preferably in the range of 0.02 % to 0.10 %. The C content is more preferably 0.03 % or more. The C content is more preferably 0.08 % or less. The C content is further preferably 0.04 % or more. The C content is further preferably 0.07 % or less.

### (Si: 0.05 % to 0.30 %)

Si is an element that dissolves in the steel to contribute to increasing the strength of the steel pipe or tube and also contributes to reducing the amount of scale-off during hot rolling. In order to ensure these effects, the Si content is preferably 0.05 % or more. Si forms highly viscous eutectic oxide together with Mn oxide. If the Si content is less than 0.05 %, the Mn concentration in the eutectic oxide is relatively high. As a result, the melting point of the eutectic oxide exceeds the molten steel temperature, and the oxide tends to remain in the weld portion 60 (see FIG. 4). This decreases the toughness of the weld portion 60. If the Si content is more than 0.30 %, red scale forms noticeably and the appearance of the steel strip 1 (see FIG. 1) degrades. In addition, the material homogeneity of the steel strip 1 may decrease due to uneven cooling during hot rolling. If the Si content is more than 0.30 %, the Si concentration in the eutectic oxide is relatively high. As a result, the melting point of the eutectic oxide exceeds the molten steel temperature and the amount of oxide increases, and the oxide tends to remain in the weld portion 60. This is likely to cause a decrease in the toughness of the weld portion 60. The Si content is therefore preferably in the range of 0.05 to 0.30 %. The Si content is more preferably 0.10 % or more. The Si content is more preferably 0.25 % or less. The Si content is further preferably 0.12 % or more. The Si content is further preferably 0.24 % or less.

### (Mn: 0.80 % to 2.00 %)

Mn is an element that dissolves in the steel and contributes to increasing the strength of the steel pipe or tube through solid solution strengthening. Mn also improves hardenability and thus contributes to increasing the strength of the steel pipe or tube through transformation strengthening and also to improving toughness. In order to achieve these effects, the Mn content is preferably 0.80 % or more. Mn forms highly viscous eutectic oxide together with Si oxide. If the Mn content is less than 0.80 %, the Si concentration in the eutectic oxide is relatively high. As a result, the melting point of the oxide exceeds the molten steel temperature, so that the oxide tends to remain in the weld portion 60 (see FIG. 4). This is likely to cause a decrease in the toughness of the weld portion 60. If Mn is contained in a large amount of more than 2.00 %, the Mn concentration in the eutectic oxide is relatively high. As a result, the melting point of the eutectic oxide exceeds the molten steel temperature and the amount of oxide increases, and the oxide tends to remain in the weld portion 60. This is likely to cause a decrease in the toughness of the weld portion 60. Moreover, if Mn is contained in a large amount of more than 2.00 %, hardenability increases excessively and martensite phase tends to form, which is likely to cause a decrease in toughness. The Mn content is therefore preferably in the range of 0.80 % to 2.00 %. The Mn content is more preferably 0.90 % or more. The Mn content is more preferably 1.80 % or less. The Mn content is further preferably 0.92 % or more. The Mn content is further preferably 1.78 % or less. The Mn content is even more preferably 0.95 % or more.

### (P: 0.030 % or less)

P has a strong tendency to segregate to grain boundaries, and thus decreases toughness. Accordingly, it is desirable to reduce P as much as possible, but up to 0.030 % is acceptable. The P content is therefore preferably 0.030 % or less. The P content is more preferably 0.025 % or less, and further preferably 0.015 % or less. Since excessively reducing P leads to longer refining time and higher production costs, the P content is preferably 0.002 % or more.

### (S: 0.0050 % or less)

S forms MnS in the steel and decreases toughness. Accordingly, it is desirable to reduce S as much as possible, but up to 0.0050 % is acceptable. The S content is therefore preferably 0.0050 % or less. The S content is more preferably 0.0040 % or less, and further preferably 0.003 % or less. Since excessively reducing S leads to longer refining time and higher production costs, the S content is preferably 0.002 % or more.

### (Nb: 0.010 % to 0.100 %)

Nb is an element that precipitates finely as Nb carbonitride during hot rolling in the steel strip production and contributes to increasing the strength of the steel strip 1 (see FIG. 1). Nb also inhibits the grain growth of austenite grains during heat treatment of the weld portion 60 (see FIG. 4) of the electric resistance welded pipe or tube and contributes to refining the microstructure of the weld portion 60. In order to ensure these effects, the Nb content is preferably 0.010 % or more. If Nb is contained in a large amount of more than 0.100 %, the amount of Nb carbonitride precipitated increases, which is likely to cause decreases in the toughness of the steel strip, the toughness of the base metal part of the steel pipe or tube, and the toughness of the weld portion of the steel pipe or tube. The Nb content is therefore preferably in the range of 0.010 % to 0.100 %. The Nb content is more preferably 0.020 % or more. The Nb content is more preferably 0.080 % or less. The Nb content is further preferably 0.022 % or more. The Nb content is further preferably 0.078 % or less. The Nb content is even more preferably 0.030 % or more.

### (Ti: 0.001 % to 0.025 %)

Ti is an element that combines with N to form TiN and thus prevents the adverse effects of N. In order to achieve this effect, the Ti content is preferably 0.001 % or more. If Ti is contained in a large amount of more than 0.025 %, the amount of Ti carbonitride precipitated along the cleavage plane of iron increases, which is likely to cause decreases in the toughness of the steel strip, the toughness of the base metal part of the steel pipe or tube, and the toughness of the weld portion of the steel pipe or tube. The Ti content is therefore preferably in the range of 0.001 % to 0.025 %. The Ti content is more preferably 0.005 % or more. The Ti content is more preferably 0.015 % or less. The Ti content is further preferably 0.007 % or more. The Ti content is further preferably 0.012 % or less.

### (Al: 0.01 % to 0.08 %)

Al is an element that acts as a deoxidizer. In order to ensure this effect, the Al content is preferably 0.01 % or more. If the Al content is more than 0.08 %, Al oxide forms significantly. In particular, Al oxide tends to remain in the weld portion 60 (see FIG. 4), which is likely to cause a decrease in the toughness of the weld portion. The Al content is therefore preferably in the range of 0.01 % to 0.08 %. The Al content is more preferably 0.02 % or more. The Al content is more preferably 0.07 % or less. The Al content is further preferably 0.03 % or more. The Al content is further preferably 0.05 % or less.

The balance of the chemical composition of the electric resistance welded pipe or tube according to the present disclosure consists of Fe and inevitable impurities. As the inevitable impurities, O (oxygen): 0.0030 % or less and N: 0.0050 % or less are acceptable.

These are the basic components in the chemical composition. These elements enable the electric resistance welded pipe or tube according to the present disclosure to obtain the desired properties. In the present disclosure, the chemical composition may further contain the following optional elements in addition to the basic components for the purpose of further improving strength and toughness.

In detail, the chemical composition may further contain one or more selected from Cu: 0.50 % or less, Ni: 0.50 % or less, Cr: 0.50 % or less, Mo: 0.50 % or less, V: 0.10 % or less, and Ca: 0.0050 % or less.

Among these, Cu, Ni, Cr, and Mo are all elements that have the effect of improving hardenability, and the chemical composition may optionally contain one or more of these elements.

Cu is an element that has the effect of increasing strength and improving toughness through hardenability improvement. In order to achieve this effect, the Cu content is preferably 0.05 % or more. The Cu content is more preferably 0.10 % or more. If the Cu content is more than 0.50 %, the effect is saturated and the effect commensurate with the content cannot be expected, which is economically disadvantageous. Accordingly, in the case where Cu is contained, the Cu content is preferably 0.50 % or less. The Cu content is more preferably 0.35 % or less.

Ni is an element that has the effect of increasing strength and improving toughness through hardenability improvement, as with Cu. In order to achieve this effect, the Ni content is preferably 0.05 % or more. The Ni content is more preferably 0.08 % or more. If the Ni content is more than 0.50 %, the grain boundary oxidation of Fe intensifies during heating of cast steel (slab), promoting surface defects. Accordingly, in the case where Ni is contained, the Ni content is preferably 0.50 % or less. The Ni content is more preferably 0.35 % or less.

Cr is an element that has the effect of increasing strength and improving toughness through hardenability improvement, as with Cu and Ni. In order to achieve this effect, the Cr content is preferably 0.05 % or more. The Cr content is more preferably 0.10 % or more. If the Cr content is more than 0.50 %, Cr oxide forms in the weld portion 60 (see FIG. 4), which significantly decreases the toughness of the weld portion 60. Accordingly, in the case where Cr is contained, the Cr content is preferably 0.50 % or less. The Cr content is more preferably 0.30 % or less.

Mo is an element that has the effect of significantly improving strength and toughness through hardenability improvement, as with Cu, Ni, and Cr. In order to achieve this effect, the Mo content is preferably 0.05 % or more. The Mo content is more preferably 0.10 % or more. If the Mo content is more than 0.50 %, the foregoing hard secondary phase tends to form in the weld portion 60 (see FIG. 4) during heat treatment of the weld portion 60, causing a decrease in the toughness of the weld portion 60. Accordingly, in the case where Mo is contained, the Mo content is preferably 0.50 % or less. The Mo content is more preferably 0.25 % or less.

### (V: 0.10 % or less)

V is an element that has the effect of solid solution strengthening by dissolving in the steel. V also has the effect of precipitation strengthening by precipitating as carbide and contributes to increasing the strength of the steel strip. In order to ensure these effects, the V content is preferably 0.005 % or more. The V content is more preferably 0.010 % or more. If the V content is more than 0.10 %, the effects are saturated, which is economically disadvantageous. Accordingly, in the case where V is contained, the V content is preferably 0.10 % or less. The V content is more preferably 0.085 % or less.

### (Ca: 0.0050 % or less)

Ca is an element that effectively contributes to morphological control of sulfides such as MnS. The Ca content is preferably 0.0010 % or more. If the Ca content is more than 0.0050 %, the effect is saturated and the effect commensurate with the content cannot be expected, which is economically disadvantageous. In addition, the amount of Ca oxide increases, causing a decrease in the toughness of the weld portion 60 (see FIG. 4) in particular. Accordingly, in the case where Ca is contained, the Ca content is preferably 0.0050 % or less. The Ca content is more preferably 0.0035 % or less. The Ca content is further preferably 0.0030 % or less.

As described above, according to the present disclosure, it is possible to obtain an electric resistance welded pipe or tube that has excellent weld portion toughness and in which, in order to enhance the fit between the inner and outer pipes or tubes of a double pipe or tube when the electric resistance welded pipe or tube is used as the outer pipe or tube, the convexity height of the cutting mark on the inner side of the outer pipe or tube has been reduced by cutting the weld bead on the pipe or tube inner side only once.

The conditions in the electric resistance welded pipe or tube production method other than those described above may be in accordance with conventional methods. The inner pipe or tube of the double pipe or tube in which the electric resistance welded pipe or tube according to the present disclosure is used as the outer pipe or tube may be any pipe or tube that is commonly used as the inner pipe or tube of a double pipe or tube. Such a double pipe or tube may be produced by a known method.

### EXAMPLES

The presently disclosed technique will be described in more detail below by way of examples in order to facilitate understanding. The present disclosure is not limited to such examples.

Hot-rolled steel sheets having the compositions shown in Table 1 were used as material. Each hot-rolled steel sheet was formed into an open pipe or tube by roll forming, and then the open pipe or tube was subjected to electric resistance welding by direct current heating. The welding conditions and the cross-sectional dimensions of the electric resistance welded pipe or tube are shown in Table 2.

The end surfaces of the open pipe or tube before welding had a double V groove machined as a result of edge milling on the steel strip before roll forming. For the cutting blade used in weld bead cutting after electric resistance welding, a bead cutter having a cutting edge that was flat on the outer side and curved with a radius of curvature of 10 % of the inner diameter on the inner side was used. Cutting work was performed by tracing the inner surface of the pipe or tube once with the cutting edge in the longitudinal direction of the pipe or tube, with the cutting depth being set so that the wall thickness at the center of the weld portion after bead cutting would be the product thickness. After this, heat treatment and sizing were performed to obtain an electric resistance welded pipe or tube.

The electric resistance welded pipe or tube thus obtained was subjected to circumferential line scanning around the weld portion using a laser displacement meter, and the profile of the inner and outer surfaces around the weld portion was measured. The results were transformed into a two-dimensional coordinate space, and a circle passing through all data points was identified by fitting such as the least squares method. The coordinates of the pipe or tube center were set from the outer diameter of the electric resistance welded pipe or tube, and the distance between the intersection points, which are the points where a straight line passing through the pipe or tube center intersects with the line scan results of the inner and outer surfaces of the pipe or tube, was calculated as the wall thickness around the weld portion. If there was no line scan coordinate data on the half line, an interpolation value of nearby coordinate data was used.

The wall thickness calculation was performed on the cutting residual part left after the weld bead cutting at a pitch of 0.1 mm to the left and right with respect to the center position of the cutting residual part, to obtain the wall thickness distribution of the weld portion. The maximum wall thickness value was then extracted from the wall thickness distribution. As the average wall thickness of the pipe or tube, the wall thickness of the pipe or tube at three points of ±90° and 180° in the circumferential direction from the center of the weld portion was measured with a micrometer and their average value was calculated.

For observation of the weld metal of the weld portion, the weld portion to be observed was etched with nital and an image was taken using an optical microscope (1000 magnification). The white part seen in the weld metal part over the entire wall thickness of the electric resistance welded pipe or tube in the obtained optical microscope image was taken to be the weld metal. The width of the weld metal was determined by converting the number of pixels in the image data into a length. From such width data, the maximum and minimum values of the width of the weld metal over the entire thickness of the weld portion were extracted. The metal width ratio was then calculated by dividing the maximum value by the minimum value.

The toughness of the weld portion was evaluated as follows. 10 mm square full-size V-notch test pieces were collected from the wall thickness center part of the weld portion. Using the obtained V-notch test pieces, a Charpy impact test was performed in accordance with ASTM A370 to determine the absorbed energy (J) at 0 °C. The number of test pieces was five, and their average value was calculated.

The results are shown in Table 2.

### [Table 1]

**Table 1**

| Steel sample ID | Chemical composition (mass%) | | | | | | | | | | | | | | |
|---|---|---|---|---|---|---|---|---|---|---|---|---|---|---|---|
| | C | Si | Mn | P | S | Al | N | Nb | Ti | Ca | Cu | Ni | Cr | Mo | V |
| A | 0.072 | 0.19 | 1.66 | 0.012 | 0.006 | 0.042 | 0.0043 | - | - | - | - | - | - | - | - |
| B | 0.142 | 0.26 | 1.12 | 0.013 | 0.003 | 0.026 | 0.0027 | 0.02 | 0.013 | - | - | - | 0.26 | 0.25 | - |
| C | 0.091 | 0.08 | 1.05 | 0.008 | 0.001 | 0.037 | 0.0029 | 0.05 | 0.007 | 0.0018 | - | - | 0.13 | - | 0.09 |
| D | 0.030 | 0.29 | 1.63 | 0.011 | 0.001 | 0.044 | 0.0031 | 0.08 | 0.018 | - | 0.38 | 0.38 | - | 0.12 | 0.03 |

| | | | | | | | | | | | | | | | |
|---|---|---|---|---|---|---|---|---|---|---|---|---|---|---|---|
| The balance other than the above in the chemical composition consists of Fe and inevitable impurities. | | | | | | | | | | | | | | | |

### [Table 2]

**Table 2**

| Electric resistance welded pipe or tube No. | Steel sample ID | Outer diameter D | Wall thickness t | Welding speed | Bevel angle | Root face | Root face | Frequency | Upset | Upset | Maximum wall thickness | Average wall thickness | Wall thickness ratio | Maximum weld metal width | Minimum weld metal width | Metal width ratio | Oxide projection ratio | Toughness value of weld portion | Fitting gap | Remarks |
|---|---|---|---|---|---|---|---|---|---|---|---|---|---|---|---|---|---|---|---|---|
| | | mm | mm | m/min | ° | mm | % | kHz | mm | % | mm | mm | - | µm | µm | - | - | J | | |
| 1 | A | 620 | 28 | 10 | 25 | 14 | 50 | 3000 | 11.2 | 40 | 293 | 28.2 | 1.04 | 30 | 20 | 1.5 | 18 | 100 | Pass | Example |
| 2 | A | 420 | 12 | 20 | 10 | 9.6 | 80 | 1000 | 6 | 50 | 122 | 12.1 | 1.01 | 50 | 30 | 1.7 | 7 | 140 | Pass | Example |
| 3 | A | 530 | 9 | 25 | 20 | 5.85 | 65 | 600 | 4.95 | 55 | 92 | 9.0 | 1.02 | 160 | 90 | 1.8 | 5 | 200 | Pass | Example |
| 4 | A | 550 | 15 | 15 | 20 | 8.25 | 55 | 900 | 6.75 | 45 | 15.4 | 152 | 1.01 | 180 | 120 | 1.5 | 6 | 180 | Pass | Example |
| 5 | B | 305 | 9 | 20 | 15 | 4.5 | 50 | 5000 | 1.8 | 20 | 9.3 | 9.1 | 1.00 | 20 | 20 | 1.0 | 5 | 250 | Pass | Example |
| 6 | B | 600 | 25 | 12 | 30 | 15 | 60 | 2000 | 10 | 40 | 25.9 | 25.1 | 1.03 | 120 | 100 | 12 | 6 | 200 | Pass | Example |
| 7 | C | 410 | 20 | 10 | 10 | 15 | 75 | 1000 | 12 | 60 | 21.2 | 202 | 1.05 | 80 | 50 | 16 | 2 | 320 | Pass | Example |
| 8 | C | 460 | 16 | 12 | 25 | 9.6 | 60 | 3000 | 3.2 | 20 | 16.6 | 163 | 1.02 | 50 | 20 | 2.5 | 9 | 280 | Pass | Example |
| 9 | D | 560 | 12 | 9 | 10 | 9.6 | 80 | 1000 | 2.4 | 20 | 12.1 | 12.0 | 1.01 | 800 | 400 | 2.0 | 8 | 290 | Pass | Example |
| 10 | A | 620 | 28 | 10 | 0 | 28 | 100 | 3000 | 16.8 | 60 | 29.6 | 28.2 | 1.05 | 900 | 50 | 180 | 8 | 60 | Pass | Comparative Example |
| 11 | C | 600 | 18 | 12 | 10 | 14.4 | 80 | 400 | 10.8 | 60 | 19.8 | 183 | 1.08 | 560 | 240 | 23 | 5 | 280 | Fail | Comparative Example |

| | | | | | | | | | | | | | | | | | | | | |
|---|---|---|---|---|---|---|---|---|---|---|---|---|---|---|---|---|---|---|---|---|
| Underlines indicate outside the scope of the present disclosure. | | | | | | | | | | | | | | | | | | | | |

As can be seen from the results in Table 2, in the electric resistance welded pipe or tube of each example, the maximum value of the wall thickness distribution in the region from the center of the weld portion to a position circumferentially away from the center by the average wall thickness was less than or equal to 1.05 times the average wall thickness, the width of the weld metal of the weld portion was 1 µm or more and 800 µm or less over the entire thickness, and the ratio of the maximum value to the minimum value of the width of the weld metal was 1.0 or more and 2.5 or less.

Moreover, in each example, the toughness value of the weld portion was 90 J or more. In particular, the toughness value of the weld portion was 140 J or more in the case where the proportion of the projected length, on the joint surface, of the oxides present within a length of 1 mm of the weld metal in the vicinity of the wall thickness center part of the weld portion (i.e. within a range of ±0.5 mm from the wall thickness center toward the inner and outer surfaces) was 10 % or less.

Further, using each of the electric resistance welded pipes or tubes as an outer pipe or tube and a 4 mm thick Inconel 625 pipe or tube as an inner pipe or tube, a double pipe or tube was produced by performing a pipe or tube expansion process from the inside of the Inconel 625 pipe or tube at an internal pressure of 50 MPa.

The fitting interface of the double pipe or tube near the weld portion of the outer pipe or tube was visually checked to determine whether there was a gap of more than 0.1 mm. The evaluation result was "pass" if the gap was 0.1 mm or less.

The results demonstrate that, by using the electric resistance welded pipe or tube of each example as the outer pipe or tube, a good double pipe or tube was obtained in which the gap was 0.1 mm or less and the outer pipe or tube was prevented from separating from the inner pipe or tube under the foregoing conditions.

It is thus possible to provide an electric resistance welded pipe or tube in which the weld bead on the inner side is small and the convexity height of the cutting residual part after cutting the weld bead is low and that is particularly suitable for use as an outer pipe or tube of a double pipe or tube, and a method of producing the same.

### REFERENCE SIGNS LIST

1 steel strip
10 end surface
2 leveler
3 cage roll group
4 fin pass roll group
5 squeeze roll
6 welder
7 electric resistance welded pipe or tube
50 face
51 bevel angle
52 root face
60 weld portion
61 heated part due to skin effect
62 heated part due to proximity effect
63 heat-affected zone immediately before electric resistance welding
64 weld metal part
65 heat-affected zone
66 base metal part
67 weld bead
68 cutting residual part
69 maximum height of protrusion
W width

## Claims

1. An electric resistance welded pipe or tube comprising a weld portion in a pipe or tube longitudinal direction,
wherein a maximum value of a wall thickness distribution of the weld portion is less than or equal to 1.05 times an average wall thickness of the electric resistance welded pipe or tube,
a width of a weld metal in the weld portion in a circumferential direction is 1 µm or more and 800 µm or less over an entire thickness of the electric resistance welded pipe or tube, and
a ratio of a maximum value to a minimum value of the width of the weld metal is 1.0 or more and 2.5 or less, the ratio being calculated by dividing the maximum value by the minimum value.

2. The electric resistance welded pipe or tube according to claim 1, wherein a toughness value of the weld portion is 90 J or more at 0 °C.

3. A method of producing the electric resistance welded pipe or tube according to claim 1 or 2, the method comprising:
performing electric resistance welding on circumferential end surfaces of an open pipe or tube as joint surfaces; and
thereafter performing cutting work,
wherein the joint surfaces form a double V groove in which faces on both pipe or tube inner and outer sides have a bevel angle of 10° or more and 30° or less and a width of a root face in a wall thickness direction is 50 % or more and 80 % or less of an average wall thickness, and
a frequency of a welding current used in the electric resistance welding is 500 kHz or more and 5000 kHz or less.

4. The method according to claim 3, wherein after the electric resistance welding, the cutting work is performed once to cause a maximum value of a wall thickness distribution on a pipe or tube inner surface of a weld portion formed by the electric resistance welding to be less than or equal to 1.05 times an average wall thickness of the electric resistance welded pipe or tube.
